# EUROPÄISCHE PATENTSCHRIFT

(11) **EP 0 799 286 B1**
(45) Veröffentlichungstag und Bekanntmachung des Hinweises auf die Patenterteilung: **13.10.1999**
(21) Anmeldenummer: 95942665.1
(22) Anmeldetag: 14.12.1995
(51) Int. Cl.: C09J 175/04, C09K 3/10

(54) **FORMTEILE AUS PU-SCHMELZKLEBSTOFFEN**
MOULDINGS MADE OF POLYURETHANE HOT-MELT-TYPE ADHESIVES
PIECES MOULEES EN COLLES A FUSION DE POLYURETHANNE

(30) Priorität: 23.12.1994 DE 4446027
(43) Veröffentlichungstag der Anmeldung: 08.10.1997
(73) Patentinhaber: Henkel Kommanditgesellschaft auf Aktien, 40191 Düsseldorf (DE)
(72) Erfinder: SCHUBERT, Georg, D-41068 Mönchengladbach (DE); KREBS, Michael, D-40724 Hilden (DE); JONSCHER, Karin, D-40227 Düsseldorf (DE); HEIDER, Roland, D-40723 Hilden (DE)
(86) Internationale Anmeldenummer: EP9504949
(87) Internationale Veröffentlichungsnummer: WO9620252

(56) Entgegenhaltungen:
- EP-A- 0 611 146
- WO-A-94/12552

## Beschreibung

Die Erfindung betrifft die Verwendung von feuchtigkeitshärtenden PU-Schmelzklebstoffen zur Herstellung von Formteilen.

Formteile aus Schmelzklebstoffen sind bekannt. So wird in der EP 0 193 746 ein Verfahren zur Herstellung von Formkörpern, Verklebungen und Beschichtungen aus der Schmelze thermoplastischer Poly(amid-urethan)-Blockcopolymere beschrieben, die erhalten worden sind durch die Umsetzung von
a) im wesentlichen linear aufgebauten, mit Carbonsäurefunktionen und/oder Amingruppen terminierten Polyamiden auf Basis von dimerisierten Fettsäuren sowie aliphatischen bzw. cycloaliphatischen Diaminen mit
b) im wesentlichen linearen Isocyanatendgruppen aufweisenden, aliphatischen Polyethern und/oder deren Reaktionsprodukten mit 2,3-Epoxypropanol,
wobei die Blockpolymeren keine freien Isocyanat- oder Epoxidgruppen enthalten. Konkretere Formteile aus diesem thermoplastischen Poly(amid-urethan)-Blockcopolymeren werden in der DE 43 21 044 beschrieben. Diese ältere, aber nicht vorveröffentlichte Patentanmeldung betrifft Kabelbäume mit Halteelementen, die mindestens die äußere Umfläche des Leitungsbündels an den Fixpunkten umfassende Spritzguß-Formkörper sind. Die Formkörper können z. B. als Durchoder Einführungstülle ausgebildet sein. Der verwendete Schmelzklebstoff sollte vorzugsweise vernetzen, insbesondere mit Luftfeuchtigkeit. Außerdem sollte er gummielastisch, flammwidrig und teilkristallin sein. Die Formkörper werden hergestellt, indem
a) die gebündelten Leitungen mit den zu fixierenden Bereichen in eine Spritzguß-Form gelegt werden,
b) die Form geschlossen,
c) die aufgeschmolzene Formmasse bis zu einem Druck von 0 bis 30 bar, insbesondere von 5 bis 30 bar, in die Form eingespritzt und zweckmäßigerweise mit dem gleichen Druck nachgedrückt,
d) bis zur Verfestigung durch Abkühlen gewartet,
e) die Form geöffnet und
f) entformt wird.

In der technischen Information "Macromelt Moulding" der Firma Henkel KGaA vom März 1994 werden ebenfalls Formteile aus dem Schmelzklebstoff Macromelt beschrieben. Das dort beschriebene Verfahren ist geeignet zum Umspritzen von Einlegeteilen aus Kunststoff. Aufgrund der guten Haftung von Macromelt werden hohe Dichtheiten und Festigkeiten mit dem umspritzten Formteil erzielt. Wegen der relativ niedrigen Viskosität des Schmelzklebstoffes Macromelt kann er mit nur geringem Druck in die Spritzform gepumpt werden, wo selbst filigrane Bauteile schonend umspült und somit abgedichtet und geschützt werden. Macromelt hat eine sehr gute Haftung auf polaren (z. B. PVC, PA 6.6, PUR) und unpolaren (z. B. PP) Kunststoffoberflächen. Zur Herstellung der Formteile wird das Macromelt ausschließlich durch Wärmezufuhr in seinen niedrigviskosen Schmelzezustand überführt. Die Schmelze wird in ein kaltes Formteilwerkzeug gepumpt, wo ihr die Wärme wieder entzogen wird. Dieser Vorgang dauert - in Abhängigkeit von der Masse (der Wärmemenge) - im Normalfall nur wenige Sekunden. Danach kann das fertige Formteil aus dem Werkzeug genommen werden. Die Verarbeitung findet auf besonderen Verarbeitungsmaschinen statt, die den Materialfluß von der Aufschmelzung bis zum Werkzeug automatisch und somit prozeßsicher steuern. Genaue Angaben, woraus der thermoplastische Formteilwerkstoff auf Hotmelt-Basis ist, sind der technischen Information nicht zu entnehmen. Im Handel werden jedoch Produkte auf der Basis von Polyamiden angeboten.

In der US 5,250,607 wird ein feuchtigkeitshärtendes extrudierbares thermoplastisches Dichtungsmittel beschrieben, das im wesentlichen aus 2 Komponenten besteht, nämlich
a) einem Prepolymeren mit etwa 2 Isocyanatendgruppen pro Molekül, welche miteinander in Gegenwart der umgebenden Feuchtigkeit reagieren und
b) einem Weich-PVC.
Aufgrund ihrer elastischen Eigenschaften eignen sie sich unter anderem als dichtende Einbettung bei elektrischen Verbindungsstücken. Außerdem können aus dieser Polymermischung auch Folien, Bänder oder Rohre extrudiert werden.

Die erfindungsgemäße Aufgabe besteht darin, blasenfreie Formmassen und ein dazu passendes Form-Verfahren zu finden, die sich nicht nur durch gute Verarbeitbarkeit wie schnelle Entformbarkeit, sondern auch durch gute Gebrauchseigenschaften wie Wärmestandfestigkeit, Chemikalienbeständigkeit, geringe Porosität und gute Haftung auf Kabelisolierungen, insbesondere aus PVC auszeichnen.

Die erfindungsgemäße Lösung ist den Patentansprüchen zu entnehmen. Sie besteht im wesentlichen darin, daß feuchtigkeitshärtende Polyurethan-Schmelzklebstoffe mit einer Schmelzviskostät von weniger als 100 Pa·s bei ihrer Verarbeitungstemperatur die mit einem Polyesterpolyol mit einem röntgenographisch bestimmten Kristallisationsgrad von mindestens 10% hergestellt wurden als Formmassen zur Herstellung von Formteilen verwendet werden. Vorzugsweise ist die Schmelzviskosität kleiner als 50 und insbesondere kleiner als 20 Pa·s.

Unter "feuchtigkeitshärtendem Polyurethan-Schmelzklebstoff" wird ein weitgehend lösungsmittelfreier Klebstoff mit Urethan-Gruppen verstanden, der bei Raumtemperatur fest ist und nach der Applikation in Form seiner Schmelze nicht nur durch Abkühlen physikalisch bindet, sondern auch durch chemische Reaktion von noch vorhandenen Isocyanatgruppen mit Feuchtigkeit. Erst nach dieser chemischen Aushärtung unter Molekülvergrößerung erhält der Klebstoff seine endgültigen Eigenschaften.

Mit "feuchtigkeitshärtend" ist gemeint, daß der Polyurethan-Schmelzklebstoff Silan- und/oder Isocyanat-Gruppen enthält, die mit Wasser, insbesondere in Form von Luftfeuchtigkeit, kettenverlängernd reagieren.

Die "Polyurethan-Schmelzklebstoffe" enthalten vorzugsweise keine Polyamid-Blöcke neben Polyurethan-Blöcken.

Der feuchtigkeitshärtende Polyurethan-Schmelklebstoff enthält folgende Komponenten:
A) mindestens ein Polyurethan-Prepolymer aus
   a) mindestens einem Polyisocyanat,
   b) mindestens einem Polyol und
   c) ggf. mindestens einem Kettenverlängerer
   in einem NCO/OH-Verhältnis von 1,1 bis 4, insbesondere von 1,5 bis 3 sowie
B) gegebenenfalls Zusätzen wie
   d) mindestens ein Harz bzw. Klebrigmacher und
   e) Hilfsstoffe wie Stabilisatoren, Antioxidantien, Katalysatoren, Trockenmittel, rheologische Additive, Pigmente und Füllstoffe sowie
   f) mindestens ein thermoplastisches Polymeres mit einem Molekulargewicht von mehr als 10 000 (Zahlenmittel) und einem Erweichungspunkt oberhalb von 50 °C (ring and ball).

Unter einem "Polyurethan-Prepolymer" ist ein Oligourethan mit Isocyanat-Gruppen zu verstehen, das als Zwischenstufe zu den vernetzten Polyurethanen anzusehen ist. Mit "mindestens" ein Polyurethan-Prepolymer ist gemeint, daß der Klebstoff mindestens ein Maximum in der Verteilungskurve der Molekulargewichte hat. In der Regel entspricht deren Anzahl der Anzahl der separat hergestellten Prepolymere, aus denen sich bei rein physikalischer Mischung der Polyurethan-Schmelzklebstoff ergibt. Die obere Grenze der Anzahl der Prepolymeren liegt also aus Praktikabilitätsgründen bei 3.

Unter einem "Polyisocyanat" ist eine niedermolekulare Verbindung mit 2 oder mehr Isocyanat-Gruppen zu verstehen. Di- und Triisocyanate werden bevorzugt, sie können aber bis zu ca. 30 Gew.-% an noch höherfunktionellen Isocyanaten enthalten. Mit steigendem Gehalt an höherfunktionellem Isocyanat ist allerdings mit ungewollten Vernetzungen sowohl bei der Herstellung als auch bei der Verwendung des Schmelzklebstoffs zu rechnen. Neben aliphatischen und cycloaliphatischen Polyisocyanaten kommen vor allem aromatische Polyisocyanate in Frage. Konkrete Beispiele sind: Toluol-diisocyanat, Diphenylmethandiisocyanat und deren Mischungen. Unter Diphenylmethandiisocyanat wird sowohl das 4,4'- als auch das 2,4'-Diphenylmethandiisocyanat verstanden. Vorzugsweise sollte das 2,4'-Isomere aber nicht mehr als 50 Gew.-% ausmachen. Es werden vorzugsweise ein oder zwei verschiedene Polyisocyanate eingesetzt. Vor allem wird reines 4,4'-Diphenylmethandiisocyanat verwendet. Seine Mischung mit dem 2,4'-Isomeren beeinflußt unter--anderem den Gehalt an nicht umgesetztem Diisocyanat, die thermische Stabilität sowie die Länge der Reaktivierbarkeit des Klebstoff-Films. Der Anteil des Polyisocyanates im Schmelzklebstoff sollte 5 bis 35, vorzugsweise 7 bis 30 Gew.-% betragen.

Bei den Polyolen handelt es sich um Polyether-, Polybutadien - und um Polyester-Polyole.

Unter einem "Polyetherpolyol" wird ein Polyether mit 2 bis 4 OH-Gruppen verstanden, insbesondere ein linearer Polyether mit 2 OH-Gruppen. Er hat vorzugsweise die allgemeine Formel HO(-R-O)ₘ-H, wobei R ein Kohlenwasserstoffrest mit 2 bis 4 C-Atomen ist. Es kommen auch Copolymere in Frage, und zwar sowohl Blockpolymere als auch statistische Copolymere. Konkrete Polyalkylenglykole sind: Polyethylenglykol, Polytetramethylenglykol und vor allem Polypropylenglykol (R = -CH₂-CH(CH₃)-), vorzugsweise wird nur eine Art von Polyalkylenglykolen eingesetzt. Es können aber auch Mischungen verwendet werden aus 2 bis 3 Polyalkylenglykolen, die sich in ihrem mittleren Molekulargewicht oder in der Art ihrer Bausteine unterscheiden.

Vor allem ist reines Polypropylenglykol interessant. Sein mittleres Molekulargewicht sollte in der Regel zwischen 250 und 4500, vorzugsweise zwischen 300 und 4000 und ganz besonders zwischen 400 und 450 liegen. (Gemeint ist das Zahlenmittel aufgrund von OH-Bestimmungen).

Das Polybutadien-Polyol wird z.B. hergestellt durch Polymerisation von Butadien in Gegenwart von H₂O₂.

Unter einem "Polyesterpolyol" wird ein Polyester mit mindestens 2 OH-Gruppen verstanden, vorzugsweise mit 2 endständigen OH-Gruppen. Sie werden auf bekanntem Wege hergestellt, sei es aus
a) Hydroxycarbonsäuren und/oder aus
b) Dicarbonsäuren - mit insbesondere 6 bis 12 C-Atomen - und Diolen, insbesondere mit 4 bis 8 C-Atomen.
Natürlich können auch entsprechende Derivate eingesetzt werden, z. B Lactone, Methylester oder Anhydride. Konkrete Ausgangsprodukte sind: Caprolacton und aliphatische Dicarbonsäuren wie Adipin-, Azelain-, Sebazin-, Decandi-, Dodecandi- und Cyclohexandicarbonsäure, aromatische Dicarbonsäuren wie Phthalsäure, Terephthalsäure und Isophthalsäure und Diole wie Ethylenglykol, 1,4-Butandiol, 1,6-Hexandiol, Diethylenglykol, Neopentylglykol, 1,4-Cyclohexandimethanol oder 3-Hydroxy-2,2-dimethylpropyl-3-hydroxy-2,2-dimethylpropanoat. Neben Homopolymeren aus obigen Bausteinen sind vor allem Copolyester aus den folgenden Bausteinen oder deren Derivaten wichtig:
1. Adipinsäure, Isophthalsäure, Phthalsäure und Butandiol,
2. Adipinsäure, Phthalsäure und Hexandiol,
3. Adipinsäure, Isophthalsäure, Phthalsäure, Ethylenglykol, Neopentylglykol und 3-Hydroxy-2,2-dimethylpropyl-3-hydroxy-2,2-dimethylpropanoat und
4. Adipinsäure, Phthalsäure, Neopentylglykol und Ethylenglykol.
Der Copolyester aus Adipinsäure, Isophthalsäure, Phthalsäure und Butandiol ist teilweise kristallin und hat eine hohe Viskosität. Die Polyesterglykole sind also bei Raumtemperatur flüssig oder fest. Wenn sie fest sind, sind sie vorzugsweise amorph. Sie können aber auch schwachkristallin sein. Vorzugsweise wird eine Mischung aus teilweise kristallinen und amorphen Polyestern eingesetzt. Die Kristallinität ist allerdings so wenig ausgeprägt, daß sie sich in dem fertigen Schmelzklebstoff nicht durch Trübung bemerkbar macht. Der Schmelzpunkt der teilkristallinen Polyester liegt im Bereich von 40 bis 130 °C, vorzugsweise im Bereich von 45 bis 110 °C. Der Schmelzpunkt gibt die Temperatur an, bei der die kristallinen Bereiche des Materials schmelzen. Er wird differentialthermoanalytisch bestimmt durch den Endotherm-Hauptpeak. Vorzugsweise wird ein Polybutandioladipat mit einem Molekulargewicht von etwa 3 500 und einem Schmelzpunkt von etwa 50 °C als teilweise kristallines Polyesterglykol verwendet.

Das mittlere Molekulargewicht des Polyesterglykols (Mn) sollte zwischen 500 und 100 000 g/mol, insbesondere zwischen 1 500 und 10 000 liegen, vorzugsweise zwischen 2 000 und 6 000. Es wird aus der OH-Zahl berechnet. Das Molekulargewicht des Polyesterglykols ist von gewisser Bedeutung: Mit zunehmendem Molekulargewicht wird die Viskosität des Schmelzklebstoffs stark erhöht, mit abnehmendem Molekulargewicht wird der Schmelzklebstoff bei Raumtemperatur nicht genügend fest.
Die Polyesterglykole haben eine Glasumwandlungstemperatur (Tg) im Bereich von vorzugsweise -90 °C bis +50 °C und insbesondere im Bereich von -80 bis +50 °C. Die Tg wird aufgrund von DSC-Messungen mit einer Geschwindigkeit von 10 °C/Min. im zweiten Lauf als Mittelpunkt der Stufe bestimmt.
Zu den besonders geeigneten Polyesterglykolen gehören solche mit einer Glasübergangstemperatur von etwa -80 °C bis +40 °C, mit einer Viskosität von etwa 300 bis etwa 300 000 mPa·s bei 130 °C (Brookfield, RVDV II + Thermosel) und mit einer Hydroxylzahl von etwa 15 bis 60.

Die mit den oben beschriebenen Polyesterpolyolen hergestellten Polyurethan-Schmelzklebstoffe eignen sich zur Herstellung von transparenten (= durchsichtigen) Formteilen mit einer Glastemperatur über 0 °C (DSC) und einem Erweichungspunkt oberhalb von 40 °C, insbesondere oberhalb von 50 °C (ring and ball-Methode). Um die Bildung von Blasen und Hohlräumen in den Formteilen gering zu halten, sollte die Dicke der Formteile möglichst klein sein, nämlich unter 5 mm, vorzugsweise unter 3 mm. Liegt die Glastemperatur oberhalb von 10 °C, insbesondere oberhalb von 15 °C, dann lassen sich die Formteile besonders gut entformen.

Die Blasenbildung ist auf das CO₂ zurückzuführen, das sich bei der Aushärtung bildet. Sie kann durch Füllstoffe, chemische Veränderungen des Polyurethans oder durch kristalline Anteile vermieden werden.

Ein Verfahren zur Herstellung von Polyurethanen mit verringerter Blasenbildung wird in der DE 35 41 776 beschrieben. Es ist dadurch gekennzeichnet, daß man in einem zweischrittigen Prozeß zunächst
a) einen 2 Hydroxylgruppen enthaltenden Polyether und/oder Polyester einer Molmasse (Zahlenmittel) zwischen 500 und 5 000 mit einem Diisocyanat in einem Molverhältnis zwischen 1 : 0,7 bis 1 : 1,3 soweit umsetzt, bis der Gehalt an freiem Isocyanat zwischen 0,4 und 0,8 Gewichtsprozent liegt, und dann
b) unter gleichzeitiger Zugabe von niedermolekularem Triol und weiterem mehrfunktionellem Isocyanat bis zu einem durch das Verhältnis von noch vorhandenem Isocyanat nach a) und dem weiteren Isocyanat sowie Triol zu errechnendem Endwert an freien Isocyanatgruppen ausreagieren läßt, wobei dieser Endwert zwischen 1,5 und 3,5 Gewichtsprozent Isocyanatgruppen, bezogen auf das erhaltene Prepolymere, einzustellen ist.

Zur Herstellung von blasenfreien Formteilen werden insbesondere teilkristalline PU-Schmelzklebstoffe verwendet. Dazu werden kristalline Polyesterpolyole zusätzlich oder anstelle der oben genannten flüssigen, teilkristallinen oder amorphen Polyole eingesetzt. Der röntgenographisch bestimmte Kristallisationsgrad soll mindestens 10 %, vorzugsweise mindestens 30 % betragen.
Vorzugsweise sollten die kristallinen Polyesterpolyole zu mehr als 10, insbesondere mehr als 20 und vorzugsweise mehr als 30 % aus Dihydroxypolyestern gemäß folgender Formel bestehen:

HO-[(CH₂)ₓ-O-CO-(CH₂)_{y}-CO-O-]_{z}-(CH₂)ₓ-OH (I)

Dabei soll
x = 2 bis 18, insbesondere 6 bis 18 sein,
y = 4 bis 14, insbesondere 8 bis 12,
z = 4 bis 80, insbesondere 3 bis 50 und
x + y = 10 bis 28, insbesondere 12 bis 26.

Die Alkoholkomponente kann bis zu 50 Mol-% ersetzt werden durch Reste eines Etherdiols. Die Carbonsäure kann bis zu 80 Mol-% ersetzt werden durch aromatische Carbonsäuren, wobei der Schmelzpunkt dieser Hydroxypolyester mit aromatischen Carbonsäureestern unter 130 °C liegen soll.

Die Länge der aliphatischen Ketten ist ausschlaggebend für die Kristallinität und damit die Abbindeeigenschaften.

Konkrete Beispiele für die einzusetzenden Diole und Dicarbonsäuren sind: Dodecandisäure und Hexandiol-1,6.

Weitere Beispiele sowie die Herstellung von kristallinen Polyesterpolyolen sind in der EP 354 527 beschrieben.

Geeignete kristalline Polyesterpolyole sind erhältlich bei der Fa. Hüls AG unter dem Namen Dynacoll 7'XXX, z.B. 7380 und 7381.

Die Glastemperatur der feuchtigkeitshärtenden kristallinen Polyurethan-Schmelzklebstoffe sollte nach DSC-Messungen unterhalb von + 5 °C liegen, vorzugsweise unterhalb von -10 °C. Das Maximum des Schmelzpeaks sollte nach DSC-Messungen oberhalb von + 30 °C liegen, vorzugsweise oberhalb von 40 °C liegen und unterhalb von 200 °C.

Mit diesen teilkristallinen Polyurethan-Schmelzklebstoffen werden Formteile mit sehr guter Flexibilität und Kältebeständigkeit erhalten. Außerdem ist eine blasenfreie Durchhärtung möglich. Die Haftung auf PVC ist hervorragend. Auch die Verarbeitbarkeit ist gut: Die Anforderungen nach geringer Klebrigkeit, Entformbarkeit und Dimensionsstabilität vor der Härtung werden ausreichend erfüllt. Die geschlossenen Formen lassen sich sehr gut blasenfrei füllen.

Unter "Kettenverlängerer" sind Verbindungen mit mehreren - insbesondere zwei - funktionellen Gruppen wie -OH, -SH, -COOH und/oder Amin zu verstehen, die ein relativ niedriges Molekulargewicht haben. Im Falle von aromatischen Kettenverlängerern liegt es unter 500, bei aliphatischen Kettenverlängerern unter 300, vorzugsweise in beiden Fällen unter 250, insbesondere unter 200. Als konkrete Verbindungen seien beispielhaft genannt:
- aromatische Kettenverlängerer wie 1,4-Bis-(β-hydroxy-ethoxy-)-benzol und ethoxyliertes und/oder propoxyliertes Bisphenol A (= 2,2-(4,4'-Dihydroxydiphenyl)-dimethylmethan,
- übliche gesättigte und ungesättigte Glykole wie Ethylenglykol oder Kondensate des Ethylenglykols, Butandiol-1,3, Butandiol-1,4, Butandiol-2,3, Propandiol-1,2, Propandiol-1,3, Neopentylglykol, Hexandiol-1,6, Bis-hydroxymethyl-cyclohexan, Dioxyethoxyhydrochinon, Terephthalsäure-bis-glykolester, Bernsteinsäure-di-2-hydroxyethylamid, Bernsteinsäure-di-N-methyl-(2-hydroxy-ethyl)amid, 1,4-Di(2-hydroxymethyl-mercapto)-2,3,5,6-tetrachlorbenzol, 2-Methylenpropandiol-(1,3),2-Methylpropandiol-(1,3), Thiodiglykol,
- aliphatische, cycloaliphatische und aromatische Diamine wie Ethylendiamin, Hexamethylendiamin, 1,4-Cyclohexylendiamin, Piperazin, N-Methyl-propylendiamin, Diaminodiphenylsulfon, Diaminodiphenylether, Diaminodiphenyldimethylmethan, 2,4-Di-amino-6-phenyltriazin, Isophorondiamin, Dimerfettsäurediamin, Diaminodiphenylmethan oder die Isomeren des Phenylendiamins. Weiterhin auch Carbohydrazide oder Hydrazide von Dicarbonsäuren,
- Aminoalkohole wie Ethanolamin, Propanolamin, Butanolamin, N-Methyl-ethanolamin, N-Methyl-isopropanolamin; Diethanolamin, Triethanolamin sowie Di- oder Tri(Alkanolamine) sowie deren Alkoxylierungsprodukte,
- aliphatische, cycloaliphatische, aromatische und heterocyclische Mono- und Diaminocarbonsäuren wie Glycin, 1-und 2-Alanin, 6-Aminocapronsäure, 4-Aminobuttersäure, die isomeren Mono- und Diaminobenzoesäure, die isomeren Mono- und Diaminonaphtheosäuren,
- Wasser.

Zur Einstellung eines geringen definierten Verzweigungsgrades können auch höherfunktionelle Kettenverlängerer in geringen Mengen eingesetzt werden, wie z. B. Trimethylolpropan oder Glycerin.

Im allgemeinen werden die Kettenverlängerer in Mengen von 0,1 bis 16, vorzugsweise 1 bis 8 Gew.-% zugegeben. Bei niedrigeren Konzentrationen nimmt der Effekt deutlich ab, bei höheren können unerwünschte Veränderungen bezüglich Haftung und Flexibilität auftreten. Natürlich können auch Mischungen von Kettenverlängerern eingesetzt werden.

Zur Verbesserung des Hot-Tacks können auch Harze bzw. Klebrigmacher in einer Menge von 0 bis 30 g/100 g Schmelzklebstoff zugesetzt werden. Konkrete Stoffe sind Ketonharze und Kohlenwasserstoffharze. Bevorzugt sind modifizierte aromatische Kohlenwasserstoff-Harze, Terpen-Harze wie z. B. α- und β-Pinen-Polymere, niedermolekulare Polystyrole wie etwa Poly-α-methylstyrol, Kolophoniumester und Cumaron/Inden-Harze.

Mit den Stabilisatoren sind Zusätze gemeint, die die physikalischen Eigenschaften möglichst konstant halten sollen, insbesondere die Schmelzviskosität und die Farbe. Dazu kann mindestens einer der folgenden beispielhaft genannten Stoffe verwendet werden: Phosphorsäure, phosphorige Säure und Toluol-sulfonyl-isocyanat.

Zur Beschleunigung der Härtungsreaktion können die bekannten Polyurethan-Katalysatoren zugesetzt werden, z. B. Diorganozinn-Verbindungen wie etwa Dibutylzinn-dilaurat oder eine Mercaptozinn-Verbindung. Ihre Menge reicht von 0 bis 1,5, insbesondere von 0,02 bis 0,2 Gew.-%, bezogen auf das Gewicht des Prepolymers.

Vorzugsweise enthalten die erfindungsgemäßen Schmelzklebstoffe jedoch keinerlei Lösungsmittel. Darunter werden inerte, organische Verbindungen mit einem Siedepunkt bis zu 200 °C bei Normaldruck verstanden. Die erfindungsgemäßen Schmelzklebstoffe enthalten ferner vorzugsweise keine inerten Füllstoffe wie z. B. Tone, Carbonate und Titandioxid, wohl aber Pigmente, und zwar in einer Menge von 0 bis 15, vorzugsweise von 0 bis 5 Gew.-%.

Als rheologisches Additiv sei pyrogene Kieselsäure genannt. Sie bewirkt ein strukturviskoses Fließverhalten.

Als thermoplastische Polymere seien genannt: Polyester, Polyethylenvinylacetat und Polyethylenacrylat. Sie bewirken eine höhere Anfangsfestigkeit.

Wichtig ist aber nicht nur der Gewichtsbereich der einzelnen Komponenten, sondern auch ihr Gewichtsverhältnis zueinander. So sollte das Verhältnis der reaktiven Gruppen NCO : OH 1,1 : 1 bis 4 : 1 betragen, insbesondere 1,15 : 1 bis 3 : 1. Das für eine konkrete Klebstoffzusammensetzung zu wählende NCO : OH-Verhältnis ist so zu wählen, daß der Schmelzklebstoff ein brauchbares Molekulargewicht hat, d. h. die Schmelzviskosität des Schmelzklebstoffes sollte weniger 100 Pa.s, insbesondere weniger als 50 Pa.s und vor allem weniger als 20 Pa·s bei der Verarbeitungstemperatur betragen. Die Verarbeitungstemperatur liegt im Bereich von 70 bis 190 °C. Außerdem sollte der Schmelzklebstoff noch mindestens 0,5 bis 3, vorzugsweise 1,0 bis 2 g an freien NCO-Gruppen pro 100 g Schmelzklebstoff haben, um eine ausreichende Härtung mit Feuchtigkeit zu ergeben. Der NCO-Gehalt wird bestimmt durch Titration.

Das Polyurethan-Prepolymer gemäß der Erfindung kann sowohl in einer Stufe als auch in mehreren Stufen hergestellt werden.

Vorzugsweise wird jedoch das Polyurethan-Prepolymer gemäß der Erfindung im Einstufenverfahren hergestellt. Dazu werden die Polyester- und Polyalkylenglykole sowie der Kettenverlängerer zunächst gemischt und dann 60 Min. bei 110 bis 130 °C unter Vakuum getrocknet. Nach Abkühlung der Mischung auf etwa 90 °C wird dann das Polyisocyanat zugesetzt. Das Reaktionsgemisch wird wiederum auf 110 bis 130 °C erwärmt. Wenn kein Katalysator zugesezt wird, dauert es im allgemeinen ca. 60 Min., bis unter Vakuum die Umsetzung praktisch beendet ist, d. h. OH-Gruppen nicht mehr nachweisbar sind, bzw. höchstens einer Menge von 2 g/100 g Prepolymer vorhanden sind, oder aber die gewünschte Viskosität erreicht ist.

Falls die gewünschten Zusätze nicht bereits während der-Bildung des Polyurethan-Prepolymers zugesetzt wurden, müssen sie nun zugesetzt und homogenisiert werden.

Da das Polyurethan-Prepolymer reaktive NCO-Gruppen aufweist, ist der Polyurethan-Schmelzklebstoff gegenüber Feuchtigkeit aus der Luft empfindlich. Es ist daher erforderlich, ihn während der Lagerung gegen Feuchtigkeit zu schützen. Dazu wird er zweckmäßigerweise in einem verschlossenen, trockenen und feuchtigkeitsundurchlässigen Behälter aus Aluminium, Weißblech oder Verbundfolien aufbewahrt.

Die zu verarbeitenden feuchtigkeitshärtenden Polyurethan-Schmelzklebstoffe haben keine bestimmten Formen.

Aus diesen Formmassen werden unter Einwirkung von mechanischen Kräften innerhalb eines bestimmten Temperaturbereiches Formteile durch Formung im Form-Werkzeug hergestellt. Der Arbeits-Zyklus umfaßt folgende Einzelschritte:
a) Die Form wird geschlossenen, nachdem eventuell zu verbindende Teile eingelegt wurden.
b) Die aufgeschmolzene Formmasse wird bis zu einem bestimmten Druck in die Form eingespritzt und gegebenenfalls nachgedrückt.
c) Es wird gewartet, bis sich die Formmasse durch Abkühlung verfestigt hat.
d) Die Form wird geöffnet.
e) Die Spritzguß-Formteile werden der Form entnommen.
f) Die Formteile werden durch Feuchtigkeit gehärtet.

Die erfindungsgemäße Verwendung zeichnet sich durch etliche positive Merkmale aus:
Gegenüber dem Spritzgußverfahren im allgemeinen und der US 5,250,607 insbesondere ergeben sich folgende Vorteile: Deutlich geringerer Verarbeitungsdruck, einfachere Maschinen und Werkzeuge, niedrigere Schmelztemperatur sowie gute Haftung auf diversen Substraten, die angespritzt bzw. umspritzt werden, durch Verklebung und nicht nur durch Verschweißung zwischen Formteilen und umspritzten Substraten, wenn beide Materialien gleich sind (z.B. PVC-Tülle auf PVC-Kabel).

Gegenüber dem Verguß mit Gießharzen ergibt sich als wichtigster Vorteil die wesentlich kürzere Zykluszeit, da die Aushärtung nicht in dem Formwerkzeug erfolgt, sondern bei der Lagerung der Formteile außerhalb des Formwerkzeuges.
Gegenüber dem moulding-Verfahren gemäß der technischen Information der Firma Henkel KGaA ergeben sich im wesentliche folgende Vorteile: Der Austausch der Polyamid-Schmelzklebstoffe durch feuchtigkeitshärtende Polyurethan-Schmelzklebstoffe ermöglicht ein breiteres Anwendungsfeld wegen der besseren Eigenschaften des vernetzten Materials bezüglich Materialfestigkeit, Materialsteifigkeit, Temperaturstandfestigkeit, Haftung auf diversen Substraten, elektrischen Eigenschaften, da die Polyamide hygroskopisch sind, und der geringeren Verarbeitungstemperatur.

Aufgrund der technischen und wirtschaftlichen Vorteile eignet sich die erfindungsgemäße Verwendung zur Herstellung von Kunststoff-Bauteilen allgemeiner Art, insbesondere bei kleinen Stückzahlen wegen der geringen Werkzeugkosten. Besonders vorteilhaft ist es, Formteile durch Aufspritzen des Polyurethan-Schmelzklebstoffes auf Einlegeteile, z.B. Kabelleitungen, Drahte, Fäden usw. herzustellen. Dabei wird neben dem Formschluß (Zugentlastung) auch die Dichtigkeit, insbesondere gegen Feuchtigkeit, sowie eine feste Verbindung zwischen den Einlegeteilen aus verschiedenen Materialien und dem Formteil als ganzem gefordert. Die durchsichtigen Polyurethan-Schmelzklebstoffe eignen als sich als Deckelersatz zum Füllen von Gehäusen, Schaltern, Sensoren usw.. Hierbei existiert nämlich häufig die Forderung nach durchsichtigem "Deckelmaterial", um optische Signale, z.B. durch LCD (Schaltzustände) zu übertragen. Die erfindungsgemäß hergestellten Formteile eignen sich auch als Gehäuseersatz zum Umspritzen von diversen Komponenten wie z.B. von elektronischen Bauteilen bzw. Schaltungen von Leiterplatten und von flexiblen Schaltungen. Die Erfindung eignet sich schließlich auch zur Abdichtung bzw. Verbindung zwischen Steckverbindern und elektrischen Leitungen sowie zur Herstellung von Steckerverbindungen durch direktes Anspritzen auf Leitungsmaterial (elektrische Leiter und Lichtwellenleiter).

Die Erfindung wird nun anhand eines Beispieles im einzelnen erläutert:

### Herstellung einer Tülle mit einem Volumen von ca. einem cm³ aus einem Polyurethan-Schmelzklebstoff auf einem PVC-Kabel

Zunächst wurde der Polyurethan-Schmelzklebstoff hergestellt. Dazu wurde ein Mol Polyesterdiol aus Hexandiol-1,6 und Dodecandisäure sowie Terephthalsäure im Molverhältnis von 6 : 4 mit einer Hydroxylzahl von 31 aufgeschmolzen und im Vakuum 15 Minuten entgast (Restwassergehalt < 200 ppm). Danach wurden 2,0 Mol 4,4-Methylendiphenyldiisocyanat zugegeben und homogenisiert. Die Ausgangsstoffe wurden bei 120 °C in 2 Stunden unter Ausschluß von Feuchtigkeit vollständig umgesetzt. Zum Schluß betrug die Viskosität nach Brookfield (Thermosel Spindel 27) 22 000 mPa·s bei 150 °C. Aus diesem Polyurethan-Schmelzklebstoff wurde folgendermaßen die Tülle mit einem PVC-Kabel hergestellt:
1. Das Formwerkzeug aus Messing wurde geöffnet.
2. Das PVC-Kabel wurde in das Werkzeug eingelegt.
3. Das Formwerkzeug wurde druckfest verschlossen.
4. Die Düse des Aufschmelzgerätes (Fa. Beyer und Otto) wird an den Einspritzkanal des Werkzeuges geführt und druckfest verbunden.
5. Der Polyurethan-Schmelzklebstoff wurde unter folgenden Bedingungen eingespritzt: Verarbeitungstemperatur 150 °C, Einspritzdruck 5 bar, Nachdruck 5 bar, Einspritzzeit 2 Sekunden, Nachdruckzeit 10 Sekunden.
6. Die Düse des Aufschmelzgerätes wurde vom Formwerkzeug weggeführt.
7. Dem Polyurethan-Schmelzklebstoff wurde durch das--metallische Werkzeug die Wärmeenergie entzogen, so daß er nach einer Abkühlzeit von 10 Sekunden fest war.
8. Das Formwerkzeug wurde geöffnet.
9. Das formstabile Formteil wurde entnommen, so daß nun ein weiterer Fertigungsvorgang starten konnte.
10. Eventuell am Formteil befindliches Angußmaterial wurde entfernt.
11. Das erzeugte Formteil wurde bei Raumtemperatur mit Luftfeuchtigkeit ausgehärtet.

Die Tülle hatte auch nach 2 Wochen Lagerung bei Raumtemperatur keine Blasen. Sie war hartelastisch mit einem E-Modul von > 1000 MPa.

Im Gegensatz dazu zeigte eine Tülle gemäß Beispiel 7 c der US 5,250,607 Blasen. Sie war mit einem E-Modul von 3,4 MPa weichelastisch.

## Patentansprüche

1. Verwendung von feuchtigkeitshärtenden PU-Schmelzklebstoffen als Formmasse zur Herstellung von Formteilen, dadurch gekennzeichnet, daß der PU-Schmelzklebstoff eine Schmelzviskosität von weniger als 100 Pa·s bei seiner Verarbeitungstemperatur hat und mit einem Polyesterpolyol mit einem röntgenographisch bestimmten Kristallisationsgrad von mindestens 10 % hergestellt wurde.

2. Verwendung nach Anspruch 1, dadurch gekennzeichnet, daß die Verarbeitungstemperatur des PU-Schmelzklebstoffes bei 70 bis 190 °C liegt.

3. Verwendung nach Anspruch 1, dadurch gekennzeichnet, daß der Schmelzklebstoff unmittelbar nach der Entformung einen Erweichungspunkt von mindestens 40°C, insbesondere mindestens 50 °C und vorzugsweise mindestens 60 °C (ring and ball) hat.

4. Verwendung nach Anspruch 3, dadurch gekennzeichnet, daß der Schmelzklebstoff nach der Aushärtung einen um mindestens 20 °C höheren Erweichungspunkt hat als direkt nach der Entformung.

5. Verwendung nach mindestens einem der Ansprüche 1 bis 4, dadurch gekennzeichnet, daß der Schmelzklebstoff auf Kunststoffen, insbesondere auf PVC, nach der Härtung relativ gut klebt und auf Metallen vor der Härtung relativ schlecht.

6. Verwendung nach mindestens einem der Ansprüche 1 bis 5, dadurch gekennzeichnet, daß die Feuchtigkeitshärtung des Schmelzklebstoffes auf Isocyanat- und/oder Silan-Gruppen zurückzuführen ist.

7. Verwendung nach mindestens einem der Ansprüche 1 oder 6, dadurch gekennzeichnet, daß der PU-Schmelzklebstoff unmittelbar nach der Entformung einen Kristallisationsgrad von mehr als 10 %, insbesondere mehr als 30 % hat.

8. Verwendung nach mindestens einem der Ansprüche 1 bis 7, dadurch gekennzeichnet, daß der PU-Schmelzklebstoff (nach dem DSC-Diagramm) oberhalb von 40 °C schmilzt und eine TG unterhalb von 5 °C hat.

9. Verwendung nach mindestens einem der Ansprüche 1 bis 8, dadurch gekennzeichnet, daß der PU-Schmelzklebstoff ein NCO-terminiertes Prepolymeres enthält, dessen Polyol zu mindestens 30 Gew.-% aus einem Dihydroxypolyester der allgemeinen Formel besteht:
HO-[(CH₂)ₓ-O-CO-(CH₂)_{y}-CO-O-]_{z}-(CH₂)ₓ-OH (I)
wobei
x = 2 bis 18,
y = 4 bis 14 und
z = 4 bis 80
ist und wobei bis zu 50 Mol-% des Diols durch ein Etherdiol und bis zu 80 Mol-% der aliphatischen Dicarbonsäure durch eine aromatische Dicarbonsäure ersetzt werden kann, wenn der Schmelzpunkt des Polyesterpolyols nicht über 130 °C liegt.

10. Verwendung nach mindestens einem der Ansprüche 1 bis 6, dadurch gekennzeichnet, daß der PU-Schmelzklebstoff transparent ist.

11. Verwendung nach mindestens einem der Ansprüche 1 bis 6 sowie 10, dadurch gekennzeichnet, daß der PU-Schmelzklebstoff eine Erweichungstemperatur von mehr als 50 °C und eine TG von mindestens als 5 °C hat.

12. Verwendung nach mindestens einem der Ansprüche 1 bis 11, dadurch gekennzeichnet, daß die Formmasse bei Temperaturen von 70 bis 200 °C aufgeschmolzen, die Schmelze mit einem Überdruck von 1 bis 50 bar in geschlossene Formen gespritzt, die abgekühlten Formteile nach kurzer Zeit entformt und dann mit Luftfeuchtigkeit ausgehärtet werden.

13. Verwendung nach mindestens einem der Ansprüche 1 bis 12 zur Herstellung von Formteilen in geschlossenen Formen, insbesondere zur Herstellung von Formteilen mit mindestens einem Einlegeteil (insert moulding).

14. Verwendung nach mindestens einem der Ansprüche 1 bis 13 zum klebenden Dichten bzw. Füllen von elektrischen Vorrichtungen, insbesondere von Sensoren, Leiterplatten und Schaltern.

## Claims

1. The use of moisture-curing PU hotmelt adhesives as molding compounds for the production of moldings, characterized in that the PU hotmelt adhesive has a melt viscosity of less than 100 Pa·s at its processing temperature and is produced by a polyester polyol with a degree of crystallization of at least 10 %, determined by x-ray photography.

2. The use claimed in claim 1, characterized in that the processing temperature of the PU hotmelt adhesive is 70 to 190°C.

3. The use claimed in claim 1, characterized in that, immediately after demolding, the hotmelt adhesive has a softening point of at least 40°C, more particularly at least 50°C and preferably at least 60°C (ring and ball).

4. The use claimed in claim 3, characterized in that the hotmelt adhesive has a softening point higher by at least 20°C after curing than immediately after demolding.

5. The use claimed in at least one of claims 1 to 4, characterized in that the hotmelt adhesive shows relatively good adhesion to plastics, particularly PVC, after curing and relatively poor adhesion to metals before curing.

6. The use claimed in at least one of claims 1 to 5, characterized in that the moisture curing of the hotmelt adhesive is attributable to isocyanate and/or silane groups.

7. The use claimed in at least one of claims 1 or 6, characterized in that the PU hotmelt adhesive has a degree of crystallization immediately after demolding of more than 10% and, more particularly, more than 30%.

8. The use claimed in at least one of claims 1 to 7, characterized in that the PU hotmelt adhesive (according to the DSC curve) melts above 40°C and has a TG below 5°C.

9. The use claimed in at least one of claims 1 to 8, characterized in that the PU hotmelt adhesive contains an NCO-terminated prepolymer in which at least 30% by weight of the polyol consists of a dihydroxypolyester corresponding to the following general formula:
HO-[(CH₂)ₓ-O-CO-(CH₂)_{y}-CO-O-]_{z}-(CH₂)ₓ-OH (I)
in which
x = 2 to 18,
y 4 to 14 and
z = 4 to 80,
up to 50 mole-% of the diol being replaceable by an etherdiol and up to 80 mole-% of the aliphatic dicarboxylic acid being replaceable by an aromatic dicarboxylic acid providing the melting point of the polyester polyol is not above 130°C.

10. The use claimed in at least one of claims 1 to 6, characterized in that the PU hotmelt adhesive is transparent.

11. The use claimed in at least one of claims 1 to 6 and 10, characterized in that the PU hotmelt adhesive has a softening temperature above 50°C and a TG of at least 5°C.

12. The use claimed in at least one of claims 1 to 11, characterized in that the molding compound is melted at temperatures of 70 to 200°C, the melt is injected into closed molds under an excess pressure of 1 to 50 bar, the cooled moldings are removed from the mold after a short time and are then cured with atmospheric moisture.

13. The use claimed in at least one of claims 1 to 12 for the production of moldings in closed molds, more particularly for the production of moldings with at least one insert (insert molding).

14. The use claimed in at least one of claims 1 to 13 for the adhesive sealing and filling of electrical components, more particularly sensors, circuit boards and switches.

## Revendications

1. Utilisation de colles à fusion de polyuréthane, durcissant sous l'effet de l'humidité, comme masse de moulage pour la fabrication de corps moulés,
caractérisée en ce que
la colle à fusion de polyuréthane présente une viscosité à la fusion inférieure à 100 Pas à sa température de transformation et a été fabriqué avec un polyol de polyester ayant un degré de cristallisation, déterminé par radiographie au rayon x, d'au moins 10 %.

2. Utilisation selon la revendication 1,
caractérisée en ce que
la température de transformation de la colle à fusion de polyuréthane est situé dans la plage allant de 70 à 190°C.

3. Utilisation selon la revendication 1,
caractérisée en ce que
la colle à fusion a immédiatement après le démoulage un point de ramollissement d'au moins 40°C, en particulier d'au mois 50°C et de préférence d'au moins 60°C (ring and ball).

4. Utilisation selon la revendication 3,
caractérisée en ce que
la colle à fusion a après durcissement un point de ramollissement supérieur d'au moins 20°C à celui qu'il a directement après le démoulage.

5. Utilisation selon au moins l'une des revendications 1 à 4,
caractérisée en ce que
la colle à fusion adhère relativement bien sur des substances synthétiques, en particulier sur du PVC, après durcissement, et relativement mal sur des métaux, avant durcissement.

6. Utilisation selon au moins l'une des revendications 1 à 5,
caractérisée en ce que
le durcissement à l'humidité de la colle à fusion est à imputer à des groupes isocyanate et/ou silane.

7. Utilisation selon au moins l'une des revendications 1 ou 6,
caractérisée en ce que
la colle à fusion de polyuréthane a, immédiatement après le démoulage, un degré de cristallisation supérieur à 10 %, en particulier supérieur à 30 %.

8. Utilisation selon au moins l'une des revendications 1 à 7,
caractérisée en ce que
la colle à fusion de polyuréthane (selon le diagramme DSC) fond à une température supérieure à 40°C et a une température de transformation du second ordre TG inférieure à 5°C.

9. Utilisation selon au moins l'une des revendications 1 à 8,
caractérisée en ce que
la colle à fusion de polyuréthane contient un prépolymère à terminaison NCO (dont le polyol est constitué pour au moins 30 % en poids d'un dihydroxypolyester de la formule générale :
HO[(CH₂)ₓ-O-CO-(CH₂)_{y}-CO-O]_{z}-(CH₂)ₓ-OH (I)
dans laquelle :
x = 2 à 18
y = 4 à 14, et
z = 4 à 80
et jusqu'à 50 % mole du diol pouvant être remplacé par un étherdiol et jusqu'à 80 % mole de l'acide bicarbonique aliphatique pouvant être remplacé par un acide dicarboxylique aromatique, lorsque le point de fusion du polyol de polyester n'est pas supérieur à 130°C.

10. Utilisation selon au moins l'une des revendications 1 à 6,
caractérisée en ce que
la colle à fusion de polyuréthane est transparent.

11. Utilisation selon au moins l'une des revendications 1 à 6, ainsi que 10,
caractérisée en ce que
la colle à fusion de polyuréthane a une température de ramollissement supérieure à 50°C et une valeur TG d'au moins 5°C.

12. Utilisation selon au moins l'une des revendications 1 à 11,
caractérisée en ce que
la masse de moulage est fondue à des températures de 70 à 200°C, le produit fondu est injecté avec une pression de 1 à 50 bars dans des moules fermés, les parties de moules refroidies étant démoulées après peu de temps puis durcies à l'humidité de l'air.

13. Utilisation selon au moins l'une des revendication 1 à 12, pour la fabrication de pièces moulées dans des moules fermés, en particulier pour la fabrication des pièces moulées avec au moins une partie d'insertion (insert molding).

14. Utilisation selon au moins l'une des revendications 1 à 13, pour étancher de façon adhésive et/ou remplir des dispositifs électriques, en particulier des capteurs, des plaquettes à circuit imprimé et des interrupteurs.
